Europäisches Patentamt

**(19)** European Patent Office

Office européen des brevets

**(11)** Publication number : **0 295 029 B1**

**(12)** EUROPEAN PATENT SPECIFICATION

**(45)** Date of publication of patent specification :
26.10.94 Bulletin 94/43

**(51)** Int. Cl.⁵ : **H04M 11/06**

**(21)** Application number : **88305136.9**

**(22)** Date of filing : **06.06.88**

**(54)** Integrated data voice multiplexer.

**(30)** Priority : **08.06.87 US 59440**

**(43)** Date of publication of application :
**14.12.88 Bulletin 88/50**

**(45)** Publication of the grant of the patent :
**26.10.94 Bulletin 94/43**

**(84)** Designated Contracting States :
**DE FR GB**

**(56)** References cited :
**FR-A- 2 266 985**
**US-A- 3 952 163**

**(73)** Proprietor : **SEISCOR TECHNOLOGIES, INC.**
**5311 South 122nd East Avenue**
**Tulsa Oklahoma 74146 (US)**

**(72)** Inventor : **Casady, Donald R.**
**6535 East 28th Street**
**Tulsa Oklahoma 74129 (US)**
Inventor : **Teodorescu, Ioan Valentin**
**4775 So. Braden, Apt. 708**
**Tulsa Oklahoma 74135 (US)**

**(74)** Representative : **Jackson, David Spence et al**
**REDDIE & GROSE**
**16, Theobalds Road**
**London, WC1X 8PL (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Background of the Invention

This invention relates to telephone communications and in particular to data voice multiplexers.

It has long been the desire of the telephone industry to maximize utilization of a subscriber's telephone line. One way is to use a data voice multiplexer that allows an analog voice signal from a telephone and a digital data signal from data equipment to share one subscriber line. Thus, if data equipment and a conventional telephone are tied to a data voice multiplexer located in a remote office, only one subscriber line shared by the telephone and data equipment needs to be fed between the remote office and its associated central office.

In general, data voice multiplexers send the data signal by using a pair of frequency shift keyed (FSK) carriers at a frequency higher than the bandwidth of the voice signal. One carrier is used to indicate mark, or a logic low bit, and the other carrier to indicate space, or a logic high bit. The voice signal is then frequency multiplexed with the FSK carriers to obtain a frequency multiplexed signal. The frequency multiplexed signal is coupled via the subscriber line to the central office. A similar data voice multiplexer at the central office separates the data and voice signals. The separated voice signal is coupled to a conventional voice switch or voice multiplexer and thus to a voice network. The separated data signal is coupled to a switched data network, a local digital data interface, or combined with a voice signal by a third data voice multiplexer and sent along another subscriber line to data equipment located at a second remote office. The data voice multiplexer may be configured to support full duplex communication by using a second pair of FSK carriers so that data may be sent simultaneously in both directions.

The full duplex FSK carrier frequencies typically used for 9600 baud service are 36 and 48 kilohertz to indicate mark and space in one direction, such as from the remote office to the central office, and 84 and 96 kilohertz to indicate mark and space in the other direction, from the central office to the remote office. It is desirable that interference with other subscriber lines is minimized by insuring switching between mark and space frequencies is phase coherent.

The permissible distance between remote and central offices is limited by the American wire gauge (AWG) of the subscriber line. In practice, data voice multiplexers have been found to operate well at a distance of 9.8 miles using 19 AWG lines down to 3.1 miles using 26 AWG lines.

A known data communications system using frequency multiplexing for transmission of data from several sources over a single telephone line is described in US-A-3952163 to Couturier et al. In the Couturier system a number of remote terminals are connected via narrow band private lines to a CPU. Each remote terminal comprises a number of modems, each with an associated frequency division multiplexer transmitter/receiver such as to allow simultaneous communication between several modems and the CPU over a single private line. User access to the remote terminal modems is through an existing public telephone network.

Two applications in particular have become popular for data voice multiplexers. The first is simple point-to-point communication between data terminal equipment at a first remote office and data communications equipment located at a second remote office. The first and second remote offices are connected to a common central office. In point-to-point applications, it is often desirable to provide communications handshake protocol such as that required to support the Electronic Industries Association (EIA) standard RS-232 interface. This requires sending and receiving handshake signals to indicate either a signaling true state (STS) or signaling false state (SFS) at either end of the line. Data voice multiplexers have been developed to support such protocol by using the presence or absence of an FSK carrier in either direction to indicate the presence or absence of STS. For example, the central office presumes that a remote office is in STS if at least one of its FSK carriers is present. One FSK carrier is selected as an idle carrier, such as the mark FSK carrier. If no data is being sent at a particular instant, but the data equipment wishes to remain connected, the idle carrier remains on at all times, thereby maintaining the data equipment is in STS. If the idle carrier is turned off, it is presumed that SFS has been entered and the data equipment no longer wishes to communicate.

A second popular application for data voice multiplexers has been in packet switch networks. Here, data is multiplexed at the first remote office as before. However, after data is separated at the central office, it is not directly connected to another remote office, but rather is first sent to a statistical multiplexer. The statistical multiplexer assembles data from several sources and sends it along a high-speed data link to a packet switch located at a network control center. This packet switch is responsible for steering data to another statistical multiplexer associated with a distant second central office. At the second central office, the data is demultiplexed and fed to a second remote office associated with the second central office. Data fed from the second central office may be sent to the second remote office through an additional data voice multiplexer.

Data voice multiplexers developed for use with packet switch networks typically support loop-back testing methodologies. In particular, the integrity of the entire packet switch network must be testable remotely from the network control center. This is done by allowing the network control center to initiate loop-back commands to remote offices over the packet switch network. Such loop-back commands are first detected by the central office statistical multiplexers. Upon detection of a loop-back command for one of its associated remote offices, a central office statistical multiplexer feeds a loop-back command along the subscriber line to the associated data voice multiplexer at the remote office. A common method for indicating loop-back between central and remote data voice multiplexers is by turning off an idle carrier. Upon detection of a turned off idle carrier, the remote data voice multiplexer enters a loop-back test mode. Once loop-back test mode is entered, the central office data voice multiplexer typically restores the idle carrier after a predetermined delay, and sends test data for a predetermined time. The remote data voice multiplexer echoes the test data back to the central office for a predetermined time while the central data voice multiplexer checks to see if the correct test data is returned. Standard protocols for loop-back testing exist, such as the International Telegraph and Telephone Consultive Committee (CCITT) Standard V.54 Loop 2.

In the above-mentioned data communication system of US-A-3952163, loop-back testing of the remote terminals from the CPU is provided for. Rather than turning off an idle carrier to indicate loop-back mode, the CPU sends an out-of-service signal along the private line to the remote terminal. The out-of-service signal is transmitted at a frequency midway between the respective mark and space carrier frequencies. On receipt of the out-of-service signal the remote terminal disconnects the modem from the public telephone network and makes a loop connection such that test data sent by the CPU to the remote terminal is retransmitted back to the CPU for checking.

We have realized it is desirable for a data voice multiplexer to simultaneously support both handshake and loop-back protocols. With current data voice multiplexers, if handshake protocol is required, communications over a packet switch network cannot be supported. If it is desired to test the subscriber line from a central office such as required in a packet switch network, handshake protocol cannot be supported. This is illustrated to some extent by the system of US-A-3952163 in which handshaking is provided for between a user and a remote terminal whereas loop-back testing is only provided for between the remote terminal and the CPU.

It is also desirable to allow some manual loop-back testing in a point-to-point application, which is not currently possible if handshake support is required. Although both protocols could be supported by adding additional carrier frequencies, this would increase the necessary subscriber line bandwidth and adversely affect the allowable distance between remote and central offices.

The two present types of data voice multiplexers cannot be mixed. That is, the equipment installer must be careful not to allow a data voice multiplexer supporting point-to-point communication to be connected to one supporting packet switch networks. If this occurs, neither multiplexer can properly interpret why an idle carrier has been dropped, as they cannot know whether the dropped carrier is to be interpreted as a command to enter loop-back mode or as a handshake signal. An additional difficulty is that the user must physically switch between the two types if he desires to communicate with both a point-to-point computer system and one available over a packet switch network.

An object of this invention is thus to provide an integrated data voice multiplexer capable of simultaneously supporting both handshake and loop-back protocol.

Another object is to have the handshake protocol operate without interrupting carriers so that a loop-back scheme can be supported by interrupting carriers.

A further object is to accomplish this without adversely affecting data transmission speed or the permissible subscriber line length between central and remote offices.

In accordance with the present invention there is provided a data communication system comprising frequency modulating means, fed by a data signal, for providing a frequency modulated signal being frequency modulated in accordance with the data signal;

frequency demodulating means, for receiving and frequency demodulating the frequency modulated signal to recover the data signal; and a telephone signal carrier coupling said frequency modulating means and said frequency demodulating means;

characterized by further modulating means, coupled to said telephone signal carrier and fed by said frequency modulating means and a signalling signal (DTR), for further modulating the frequency modulated signal in accordance with the signalling signal to provide a transmitted data signal to said telephone signal carrier; and further demodulating means, coupled to said telephone signal carrier, for demodulating the transmitted data signal to recover the signalling signal.

The present invention also provides a method of communicating a data signal (TXD) from a near end office to a far end office comprising the steps of, providing a carrier signal at the near end office; frequency modulating the carrier signal in accordance with the data signal (TXD) and transmitting the frequency modulated signal to the far end office via a telephone signal carrier; and receiving and demodulating the transmitted signal at the far end office to recover the data signal (RXD); characterised by indicating signalling false state or signalling true state of the transmitted signal to the far end office by selectively further modulating or not further modulating the frequency modulated carrier signal prior to transmission.

A data voice multiplexer embodying the present invention features a normally idle carrier having a narrowband encoding modulation when in signalling false state. The narrowband modulation is narrower in frequency than any frequency shift modulation used for sending data. The encoding modulation may be coherent phase or amplitude modulation. When signalling true state is to be entered, modulation is removed from the idle carrier.

In either signalling true state or signalling false state, a dropped carrier is used to indicate loop-back mode. A level detector associated with the data voice multiplexer detects loop-back and can be used to force received data to a known state when received carrier drops below a predetermined level.

An advantage of this invention is that both handshake and loop-back methodologies can be supported with a single data voice multiplexer. No appreciable bandwidth increase is required since the encoding modulation has a bandwidth much smaller than the data rate.

Brief Description of the Drawings

These and other objects, features, and advantages become evident from examination of the following detailed description when read in connection with the accompanying drawings where:

FIG. 1 shows block diagrams of voice and data communications networks using an integrated data voice multiplexer in point-to-point and packet switch network applications according to this invention;

FIG. 2 is a more detailed block diagram of an integrated data voice multiplexer according to this invention;

FIG. 3 is a timing diagram showing the various handshake signals fed between integrated data voice multiplexers;

FIG. 4 is a schematic of a phase encoder and data hold circuit forming a portion of the integrated data voice multiplexer; and

FIG. 5 is a schematic of a phase decoder associated with the invention.

Detailed Description of the Preferred Embodiments

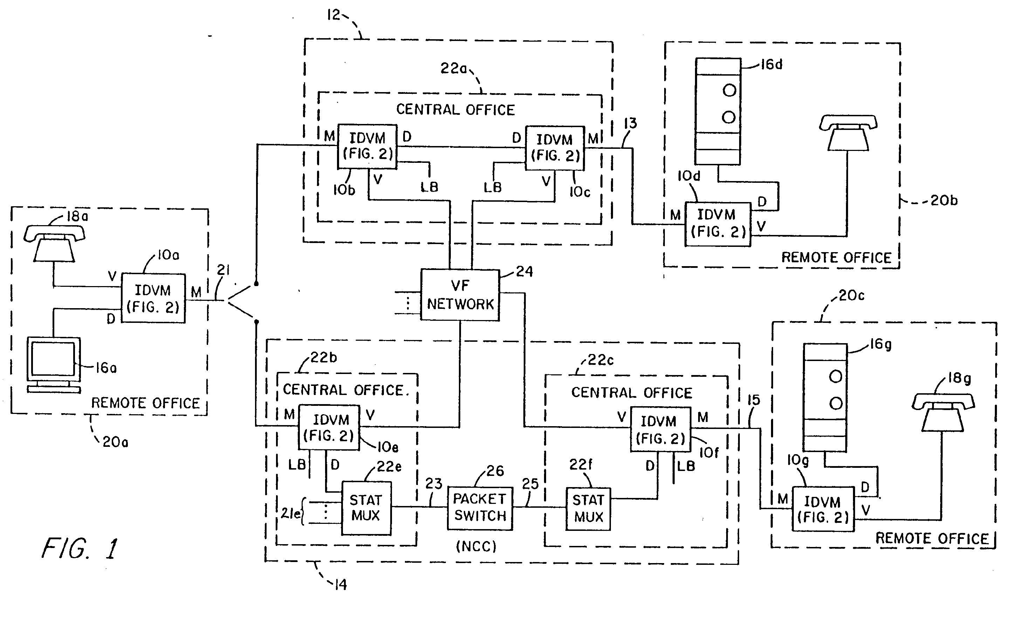

Now referring to the drawings, where like reference characters designate corresponding parts throughout the several views, an embodiment of the invention is shown in FIG. 1 including an integrated data voice multiplexer (IDVM) 10a-g capable of use in a point-to-point connection 12 or a packet switch connection 14. Thus, for example, the user of a computer terminal 16a (also referred to as data terminal equipment) located at a remote office 20a may communicate with the computer system 16d (also referred to as data communication equipment) located at remote office 20b using the point-to-point connection 12 or may also communicate with a computer system 16g located at a remote office 20c using the packet switch connection 14.

An exemplary IDVM 10a takes voice frequency signals available at a voice port V from a telephone 18a, and data signals available at a data port D from data terminal equipment 16a and combines then into an outgoing multiplexed signal at multiplexed port M. IDVM 10a also separates an incoming signal on multiplexed port M into voice port V and data port D signals provided to telephone 18a and data terminal equipment 16a, respectively. Thus, both voice and data signals may be passed to and from telephone 18a and data terminal equipment 16a along a single subscriber line 21 connected to IDVM 10a at port M.

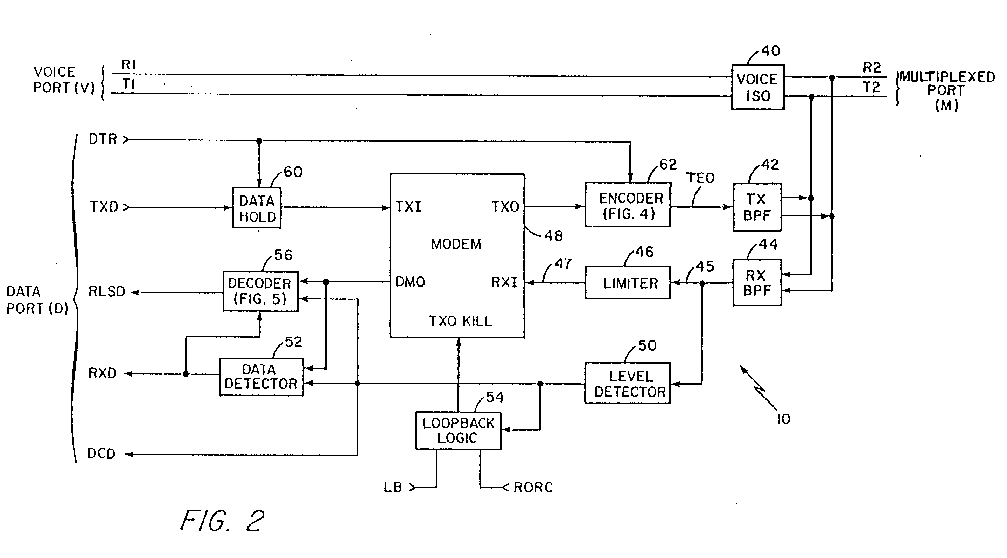

In order for data terminal equipment 16a at remote office 20a to send data to data communications equipment 16d at remote office 20b, remote offices 20a and 20b are coupled via point-to-point connection 12. Point-to-point connection 12 comprises a single central office 22a having a second IDVM 10b and third IDVM 10c coupled in a point-to-point configuration. In particular, multiplexed port M of IDVM 10a is coupled to multiplexed port M of second IDVM 10b. IDVM 10b separates the voice frequency signal originating from telephone 18a to its voice port V and couples it to a voice frequency network 24. The data signal available at data port D of IVDM 10b is fed to the data port D of the third IDVM 10c. The third IDVM 10c couples the data signal and a voice signal from the voice frequency network 24 to multiplex port M of IDVM 10c for transmittal to remote office 20b over a second subscriber line 13. Upon arrival at remote office 20b, the data signal separated by a fourth IDVM 10d is fed to data communications equipment 16d via data port D of IDVM 10d. The voice port V of IDVM 10d is used to provide voice service to a telephone located at remote office 20b. Data is transmitted from data communications equipment 16d at remote office 20b to data terminal equipment 16a at remote office 20a in similar fashion but reversed in flow as IDVMs 10a-d are bidirectional or full duplex. Data ports D of IDVMs 10a-d include data signal lines as well as handshaking signal lines, as discussed in greater detail in connection with FIG. 2. Additionally, a loop-back input LB is provided to IDVMs 10b and 10c to allow the initiation of a loop-back test from central office 22a. If a loop-back command is asserted to IDVM 10b, for example, appropriate signals are sent along subscriber line 21 to IDVM 10a to cause it to enter a loop-back mode. Similarly, a loop-back input on IDVM 10c allows testing of its connection to IDVM 10d along subscriber line 13.

IDVM 10a at remote office 20a may also be connected via subscriber line 21 to data communications equipment 16g available through packet switch connection 14. While connections are described below as following from data terminal equipment 16a to data communications equipment 16d or 16g, it should be understood that these connections are full duplex and data travels in both directions. In particular, packet switch connection 14 includes a central office 22b having an IDVM 10e. IDVM 10e separates the voice portion of the multiplexed signal and feeds it to voice frequency network 20 as before. Here, however, the separated data signal at data port D is fed to a statistical multiplexer 22e. Statistical multiplexer 22e combines the data port D output from IDVM 10e with data from other sources 21e along a dedicated high-speed data transmission line 23 coupled to a packet switch network 26. Packet switch 26 is typically located at a network control center (NCC). The statistically multiplexed high-speed data is routed along another high-speed line 25 to a second statistical multiplexer 22f associated with another central office 22c. There, the second statistical multiplexer 22f separates high-speed data signals, one of which is fed to data port D of another IDVM 10f. IDVM 10f combines this data with a voice frequency signal from the voice frequency network 20 at its multiplexed output M. It feeds the multiplexed signal along a subscriber line 15 between central office 22c and the remote office 20g associated with data communications equipment 16g. In this configuration as well, the lines fed to data ports D also include input and output data signals as well as handshake signals. Here, it is necessary for the devices coupled to packet switch network 26 to be testable from the network control center. For example, in this configuration, it is necessary for loop-back commands to be fed from packet switch network 26 along high-speed line 23 to statistical multiplexer 22e so that each of the data sources 21e connected to statistical multiplexer 22e may be tested. This allows testing of the integrity of the complete connection between data terminal equipment 16a at remote office 20a and data communications equipment 16g located at remote office 20g from the network control center. The network control center initiates loop-back commands along packet switch network 26 to statistical multiplexers such as 22e and 22f located at the associated central offices. At statistical multiplexer 22e, the loop-back command is detected and fed to the loop-back input LB of the associated IDVM 10e. Upon detection of a loop-back command, IDVM 10e passes this information along subscriber line 21 to IDVM 10a located at remote office 20a. IDVM 10a may then acknowledge receipt of the loop-back command and enter loop-back mode.

FIG. 2 shows an integrated data voice multiplexer 10 IDVM in more detail, including a voice isolator 40, transmit 42 and receive 44 bandpass filters, limiter 46, digital modem 48, level detector 50, data detector 52, loop-back logic 54, decoder 56, data hold circuit 60, and encoder 62. The signals associated with voice port V and multiplexed port M of IDVM 10 are the familiar ring and tip conductors R1, T1, and R2, T2. The signals associated with data port D shown here are certain signals in accordance with the RS232 standard, but it should be understood that other communication handshake protocols can be supported as well. The signals shown include data terminal ready DTR, transmit data input TXD, remote line sense data RLSD, receive data RXD, and data carrier detect DCD. These signals are fed to and from a digital data source such as data terminal equipment 16a (FIG. 1) or data communications equipment 16d. The operation of IDVM 10 shall first be described as it demultiplexes voice and data signals at the multiplexed port M to the voice port V and data port D. Its operation as a multiplexer of signals on voice port V and data port D to provide a multiplexed signal at multiplexed port M connection will then be described.

A multiplexed signal is received at multiplexed port M on conductors R2 and T2, and fed to both the voice frequency isolator 40 as well as receive bandpass filter 44. Voice isolator 40 performs a low-pass filter function, typically with a cut-off frequency below 6 kilohertz to provide the voice frequency signal at the voice port V at conductors T1 and R1.

Receive bandpass filters 44 include a pair of bandpass filters, centered at the receive carrier frequencies, to prevent voice signals from entering the data signal portion of IDVM 10. As the data portion of the multiplexed signal at port M is typically a frequency shift-keyed (FSK) modulated signal, there are two receive carrier frequencies, one for space and one for mark. The receive carriers for an IDVM 10 located at a remote office typically are 84 kilohertz and 96 kilohertz for space and mark respectively. One carrier, usually the mark carrier, is selected as an idle carrier. The idle carrier remains on when no data is to be sent presently, but the connection between remote office 20 and central office 22 is to be maintained. The receive frequencies for a central office IDVM 10 usually are 36 kilohertz and 48 kilohertz for space and mark. The receive frequencies can be set upon installation of IDVM 10. Receive bandpass filter 44 outputs a filtered FSK signal 45 which is fed to limiter 46. Limiter 46 converts the filtered FSK signal 45 to a digital filtered FSK signal 47. This digital filtered FSK signal 47 is fed to digital modem 48 at its receiver input RXI. Digital modems known in the art typically include a digital demodulator section having a digital discriminator and digital low-pass filter (not shown). This demod-

5

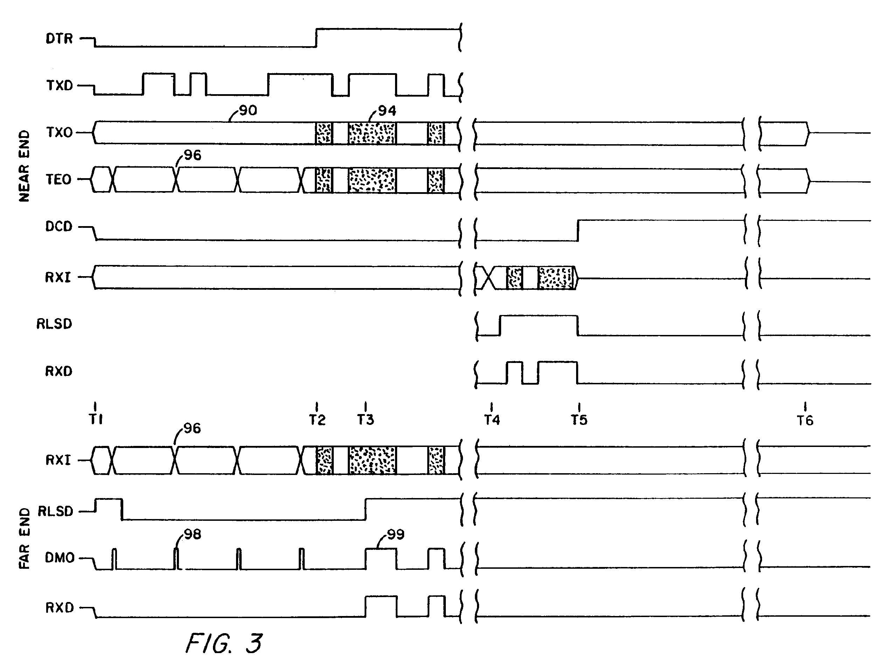

ulator portion provides a demodulated output DMO. As will be discussed with FIG. 3, the demodulated output DMO of digital modem 48 is a digital signal having a mostly logic low voltage when a mark receive frequency is present in the filtered FSK signal 45 and a mostly logic high voltage when a space frequency is present in the filtered FSK signal 45.

Also operating on the output of receive bandpass filter 44 is level detector 50. Level detector 50 determines if the voltage level of the filtered FSK signal 45 is adequate. It outputs a data carrier detect DCD signal indicative of the voltage level.

This data carrier detect DCD signal is one of the signals fed to loop-back logic 54. In some circumstances, data carrier detect DCD is used to determine if loop-back mode should be entered. The function of loop-back logic 54 depends upon whether IDVM 10 is located at a central office 22 or a remote office 20. If IDVM 10 is located at a remote office 20 and if data carrier detect DCD indicates an inadequate carrier level, loop-back logic 54 provides a logic signal to a TXO Kill input of digital modem 48 to kill its transmitter output TXO. The location of the IDVM 10 may be indicated to loop-back logic 54 by a remote or central RORC Logic signal. Alternately, if IDVM 10 is located at a central office 22, the desire to initiate a loop-back is indicated via the loop-back input LB. Loop-back logic 54 feeds this to the TXO Kill input of digital modem 48. Loop-back logic 54 may contain other logic circuits so as to conform to loop-back testing standards such as the CCITT Standard V.54 Loop 2 or other standards. Such logic typically initiates or restores the carriers after a predetermined period and then enters a data loop-back testing mode. The data loop-back mode is terminated after expiration of a second pretermined period.

Data carrier detect DCD is also fed as an output signal from IDVM 10 at data port D. It is also used by data detector 52 and decorder 56.

Data detector 52 normally passes the demodulated output DMO of digital modem 48 as the receive data RXD signal at data port D. If level detector 50 indicates inadequate filtered FSK signal level, data detector 52 clamps receive data RXD to a predetermined logic level such as mark.

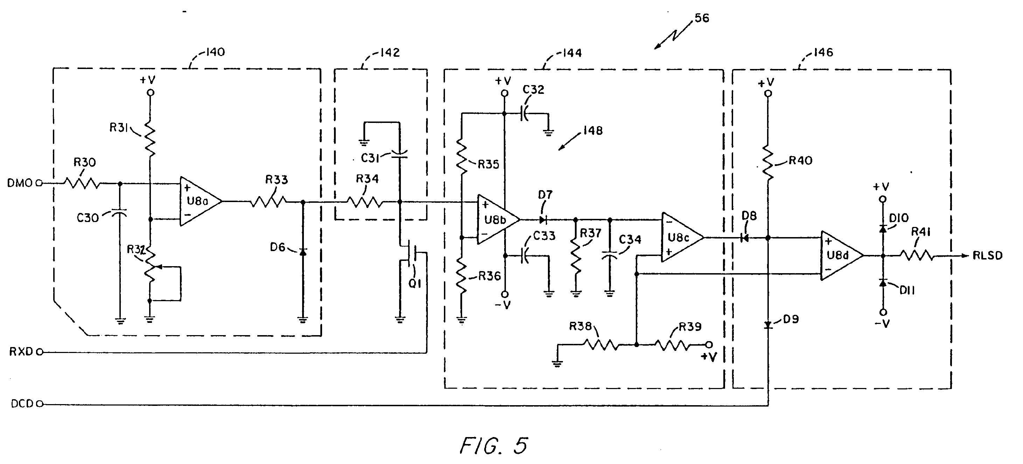

Decoder 56 operates on both the demodulated output DMO of digital modem 48 and the data carrier detect DCD signals. Decoder 56 determines if there is modulation such as phase reversals in the demodulated output DMO. If so, it outputs a remote line sense data RLSD signal indicating that a signaling false state has been entered. Decoder 56 uses the data carrier detect DCD signal to clamp remote line sense data RLSD to a known state if the receive data carrier levels are inadequate. Decoder 56 also uses the receive data RXD output of data detector 52, as it need only look for modulation in the idle carrier. A decoder 56 embodied as a phase reversal detector is described in more detail in FIG. 5.

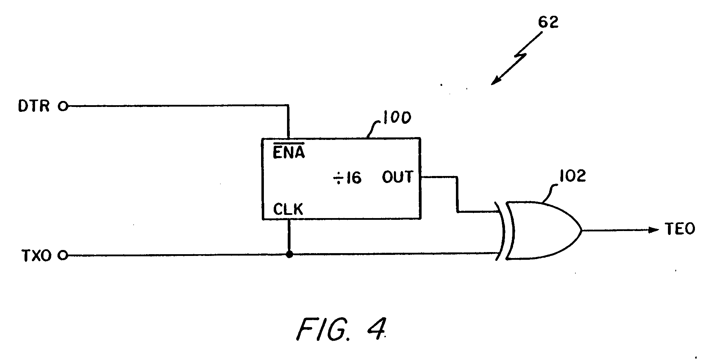

The operation of IDVM 10 as a transmitter will now be described. Data to be transmitted by the data source is fed as a logic signal to the transmit data TXD input. A data terminal ready DTR signal indicates when the data present at transmit data TXD is valid. When data terminal ready DTR enters the true state, data hold circuit 60 allows digital data to pass to a transmit data input TXI of digital modem 48. A modulator portion of modem 48 provides FSK carrier signals at a transmitter output TXO modulated in accordance with transmit data TXD. Thus, transmitter output TXO is a digital signal having one frequency when a mark is to be transmitted, and another frequency when a space is to be transmitted. The modulator portion of digital modem 48 may include a digital low-pass filter with a cutoff frequency of 9600 hertz feeding a digital modulator (not shown). The transmitter output TXO of digital modem 48 is then fed to encoder 62 for encoding a further modulation if data terminal ready DTR is false. As transmit data TXD is forced to the idle carrier frequency when data terminal ready DTR is false, modulation is encoded only when transmitter output TXO is at the idle carrier frequency. An encoder 62 operating as a phase reversal modulator is described in more detail in connection with FIG. 4. The output of encoder 62 is transmitter encoded output TEO. This signal is fed to the transmit bandpass filters 42. Transmit bandpass filters 42 consist of two bandpass filters at 36 and 48 or 84 and 96 kilohertz, depending upon whether IDVC 10 is located at the remote 20 or central office 22, respectively. The output of transmit bandpass filters 42 is coupled to multiplexed port M.

Regardless of whether IDVM 10 is located at the remote 20 or the central office 22, when describing its signaling functions, the instant unit is referred to as the near end unit and the other unit is referred to as the far end unit. Thus, when discussing the operation of a remote office 20 IDVM such as 10a (FIG. 1), the remote office 20 is referred to as the near end and the central office 22 as the far end. Also, when discussing the operation of a central office 22 IDVM such as IDVM 10b (FIG. 1), the central office is referred to as the near end and the remote office is referred to as the far end.

The signaling operation of an IDVM 10, regardless of whether it is located at the remote office 20 or the central office 22, will be further understood by examination of FIG. 2 together with the timing diagram in FIG. 3. In the situation depicted there, a near end unit is transmitting to a far end unit from time T1 to T4. Between times T4 and T6, the near end is receiving data from the far end. Logic low levels indicate signals in a false state and logic high the true state. At time T1, the near end unit has its data terminal ready DTR signal in a false state to indicate that it is not yet ready to send data. Transmit data TXD may be switching between logic true and false to indicate that data is present. However, the fact that data terminal ready DTR is kept false means that transmit data TXD is not to be sent to the far end. Thus, data hold circuit 60 outputs a logic level indicating idle state to the transmit input TXI of digital modem 48. Its transmit output TXO is thus at the idle or mark frequency. The depiction of transmit output TXO in FIG. 3 at time T1 is thus shown as a mark carrier signal; the details of the oscillations in this signal at the carrier frequency have been removed for clarity. Instead, the light shaded portions 90 of modulated signals such as transmit output TXO are to be interpreted as being at the mark frequency, and darker shaded portions 94 are to be interpreted as being at the space frequency. Given that at time T1 data terminal ready DTR is false, the transmitter encoded output TEO signal from encoder 62 will have periodic modulations such as phase reversals placed within it. These phase reversals are indicated in FIG. 3 as amplitude dropouts 96. At a time T2, the data terminal ready DTR signal is moved to a logic true state. This causes the transmit input TXI and hence the transmit output TXO of digital modem 48 to begin switching between mark and space frequencies in accordance with transmit data TXD. It also causes encoder 62 to stop placing phase reversals in its transmitter encoded output TEO.

Shifting attention to what happens at far end, it can be understood how IDVM 10 operates as a receiver. The incoming multiplexed signal is fed through receive bandpass filter 44 and limiter 46 to provide a digital FSK modulated signal 47 at the receive input RXI of modem 48. The receive input RXI appears much as the TEO transmitter encoded output at the near end. The demodulated output DMO of modem 48 appears as a digital signal having a mostly logic false or mark value between time T1 and T2 with the periodic phase reversals 96 in receive input RXI causing narrowband periodic pulses 98. Data detector 52 operates as a filter with a cut-off frequency low enough to allow pulses 99 at the data rate in demodulated output DMO to be passed but narrowband pulses 98 due to phase reversals 96 to be inhibited. The occurrence of narrowband pulses 98 in demodulated output DMO is detected by decoder 56 to cause the remote line sense data RLSD signal to enter the logic false state. Note there is delay between time T1 and the time at which remote line sense data RLSD drops to logic low - this is because the encoded phase reversals 96 are at rate lower than the data rate, and several data periods may pass before a narrowband pulse 98 occurs. Upon detection of the absence of narrowband pulses 98 in demodulated output DMO such as by time T3, decoder 56 allows the remote line sense data RLSD signal to assume a logic true state. The time delay between times T2 and T3 is known as the turnaround delay. This delay may be as long as the period chosen for phase reversals 96. This length chosen for this period must be traded off with the additionally small bandwidth needed to transmit the transmitted encoded output TEO given its phase reversals. In practice, a phase reversal rate of $^1/16$ the data rate has been found acceptable.

FIG. 4 shows a phase encoder 62 with more detail. It operates using the data terminal ready DTR signal to encode phase reversals in the transmitter output TXO signal before it is fed as the transmitter encoded output TEO signal. If data terminal ready DTR is at a false level, indicating that data is not to be sent, it is desired that phase reversals be placed in transmitter output TXO at a rate less than the data rate. Shown in FIG. 4 and in the preferred embodiment, phase encoder 62 includes a divide by 16 counter 100. The data terminal ready DTR input is directly fed to a not enable input ENA. Transmitter output TXO, being a digital signal, may be used to clock counter 100. The divide by 16 output available at counter 100 output OUT is then exclusive ORed with transmitter output TXO by gate 102 to insert the desired phase reversals. Counter 100 and exclusive or gate 102 may be implemented using standard logic circuits available as part numbers 74HC4024 and 74HC86 from the Texas Instruments Corporation of Dallas, Texas.

FIG. 5 shows a phase decoder 56 with more detail. Decoder 56 removes phase reversals from demodulated output DMO to provide remote line sense data RLSD. It uses receive data RXD and data carrier detect DCD to perform this function. Phase decoder 56 preferably includes a fast integrator 140, a slow integrator 142, an integrator disable switch Q1, a level detector 144, and a differential driver 146. Fast integrator 140 serves to detect the presence of narrowband pulses 98 (FIG. 3) in demodulated output DMO and removes energy due to data pulses 99. Slow integrator 142 integrates the output of fast integrator 140 so that a number of narrowband pulses must occur before allowing the remote line sense data RLSD output of phase decoder 56 to change from true to false. Slow integrator 142 serves to improve noise performance. Disable switch Q1 serves to disable the output of slow integrator 142 when receive data RXD is in the space state. This is desirable, as narrowband pulses 98 are only present in demodulated output DMO when receiver data RXD is in mark or idle state. Level detector 144 uses a comparator 148 to determine when the output of slow integrator 142 has reached a level sufficient to indicate that the predetermined number of narrowband pulses 98 reversals has occurred. A resistor R37 and capacitor C34 may be used to additionally adjust the change in the output level of comparator 148, so that remote line sense data RLSD has equal rise and fall times. Differential driver 146 serves to both clamp remote line sense data RLSD to the false state if data carrier detect DCD indicates a lost receive carrier, as well as to provide additional buffering.

Fast integrator 140 may be embodied as a series resistor R30 with shunt capacitor C30 connected from the demodualted output DMO signal to ground. The output of series resistor R30 is fed to the positive input of a comparator U8a. The minus input of comparator U8a is coupled to the output of a series resistor voltage divider formed at a node between a resistor R31 and a potentiometer R32. The voltage divider is connected between a positive voltage supply +V and ground. The output of comparator U8a is fed through series resistor R33 to a shunt reverse bias diode D6. Diode D6 serves to insure that the output of fast integrator 140 does not reach a negative voltage level.

Slow integrator 142 includes a series resistor R34 and ground shunt capacitor C31.

Switch Q1 is embodied as a field effect transistor having its drain connected to the output of resistor R34 and shunt capacator C31, source connected to ground, and gate connected to the receive data RXD signal. The output of slow integrator 142 is at the node where capacitor C31, resistor R34, and switch Q1 connect.

Level detector 144 includes a second comparator U8b. The plus input of comparator U8b is coupled to the output of slow integrator 142. The minus input of comparator U8b is fed by a voltage divider formed from pair of series resistors R35 and R36 coupled between the +V supply and ground. Bypass capacitors C32 and C33 are preferably connected between the +V and a -V voltage supply near comparators U8a-d. Series forward biased diode D7 is coupled to the output of comparator U8b and feeds a ground shunt resistor R37 and ground shunt capacitor C34. The output of series diode D7 is also fed to the minus input of a third comparator U8c. The plus input of this comparator is fed by the output of a voltage divider formed from two resistors R38 and R39 placed in series between the +V supply and ground. The output of this voltage divider is also fed to the minus input of U8d forming part of differential driver 146.

Differential driver 146 is seen to include a reverse biased series diode D8 feeding a pull-up resistor R40 coupled to the +V supply. The data carrier detect DCD signal is fed through a reverse biased diode D9 to the input of comparator U8d. Resistor R40 and diodes D8 an D9 serve to allow the data carrier detect DCD signal to force remote line sense data RLSD to a logic low level if data carrier detect indicates lost carrier. The output of comparator U8d is provided with proper impedence and voltage levels by appropriately selected supply shunt diodes D10 and D11, and series output resistor R41.

Phase decoder 56 has been found to work well with an IDVC operating at 9600 baud and having a signaling false state phase reversal rate of $1/16$ the mark carrier frequency using the following circuits and component values:

| Component Name | Nominal Value or Part Number and Manufacturer |
|---|---|
| R30 | 56 K ohms |
| R31 | 22 K ohms |
| R32 | 20 K ohms |
| R33 | 10 K ohms |
| R34 | 100 K ohms |
| R35 | 100 K ohms |
| R36 | 22 K ohms |
| R37 | 22 K ohms |
| R38 | 39 K ohms |
| R39 | 100 K ohms |
| R40 | 22 K ohms |
| R41 | 300 ohms |
| C30 | 180 pf |
| C31 | 15 nf |
| C32 | 10 nf |
| C33 | 10 nf |
| C34 | 10 nf |
| U8a-d | DL064, Analog Devices, Inc. |
| D6-D11 | 1N4148 Motorola, Inc. |

Having described a preferred embodiment of the invention, numerous variations may now become apparent to those of skill in the art. For example, other arrangements of components for phase encoder 62 and phase decoder 56 would provide the same function. The signaling handshake signal may be other than bi-phase modulated as shown here. Other data communications protocols besides RS232 having the need for a signaling handshake signal may be supported. Higher data rates may be accommodated with appropriate adjustment of circuit parameters. Although only the mark or idle carrier is modulated by the above system, the other carrier could also be modulated to indicate a second handshake signal.

**Claims**

1. A data communication system comprising:
   frequency modulating means (48), fed by a data signal, for providing a frequency modulated signal being frequency modulated in accordance with the data signal;
   frequency demodulating means (48), for receiving and frequency demodulating the frequency modulated signal to recover the data signal; and

a telephone signal carrier (13,15,21) coupling said frequency modulating means (48) and said frequency demodulating means (48);

characterized by further modulating means (62), coupled to said telephone signal carrier (13,15,21) and fed by said frequency modulating means (48) and a signalling signal (DTR), for further modulating the frequency modulated signal in accordance with the signalling signal to provide a transmitted data signal to said telephone signal carrier (13,15,21); and

further demodulating means (56), coupled to said telephone signal carrier, for demodulating the transmitted data signal to recover the signalling signal.

2. Apparatus according to claim 1, characterized in that the frequency modulating means (48) is coupled to a carrier signal, for frequency shift key modulating the carrier signal in accordance with the data signal; the apparatus further comprising means (60) for maintaining the carrier signal in a predetermined state when the data signal is switched off; and the further modulating means (62) selectively further modulating the carrier signal when the signalling signal indicates signalling false state or selectively not further modulating the carrier signal when the signalling signal indicates signalling true state.

3. Apparatus according to claim 2 characterized by means (54), coupled to the carrier signal and a loop-back signal, for attenuating the carrier signal when the loop-back signal indicates a loop-back mode true state.

4. Apparatus according to claim 2, characterized in that the further modulating means (62) modulates the carrier signal with a narrowband signal having a bandwidth less than the data signal.

5. Apparatus according to claim 2 or 4, characterized in that the further modulating means (62) phase modulates the carrier signal.

6. Apparatus according to claim 5, characterized in that the further modulating means (62) comprises:
a counter (100), fed by the carrier signal (TXO) at a clock input and providing a divided signal; and
an exclusive or gate (102), fed by the carrier signal (TXO) and the divided signal.

7. Apparatus according to claim 2, characterized in that the further modulating means (62) amplitude modulates the carrier signal.

8. Apparatus according to claim 2, characterized in that the frequency modulating means (48) additionally modulates another carrier signal in accordance with the data signal.

9. A data communication system according to claim 1,
characterized by a near end data voice multiplexer (10) and a far end data voice multiplexer (10) coupled by the said telephone signal carrier (13,15,21), the near end data voice multiplexer comprising:
the said frequency modulating means (48), the said further modulating means (62), and means (40, 42) for coupling the transmitted data signal and a voice signal to provide a multiplexed signal;
the far end data voice multiplexer comprising:
the said frequency demodulating means (48), the said further demodulating means (56), and means (40, 44) for separating a multiplexed signal into a transmitted data signal and a voice signal.

10. Apparatus according to claim 9, characterized in that the far end data voice multiplexer comprises detector means (50) for determining if the near end data voice multiplexer is requesting entry of a loop-back test mode by comparing a carrier signal voltage of the transmitted data signal to a predetermined voltage threshold; and decoder means (56), fed by the received transmitted data signal, for determining if the near end data voice multiplexer is entering signalling false state by detecting narrowband modulation in the carrier signal.

11. Apparatus according to claim 10, characterized in that the decoder means (56) comprises:
a fast integrator (140), fed by the carrier signal, and providing a fast integrated carrier signal;
a slow integrator (142), fed by the fast integrated signal, and providing a slow integrated signal; and
a level detector (144), coupled to the slow integrator, and providing a phase detect signal.

12. A method of communicating a data signal (TXD) from a near end office (22) to a far end office (20) comprising the steps of:

providing a carrier signal at the near end office (22);

frequency modulating the carrier signal in accordance with the data signal (TXD) and transmitting the frequency modulated signal to the far end office (20) via a telephone signal carrier (13,15,21); and

receiving and demodulating the transmitted signal at the far end office (20) to recover the data signal (RXD);

characterised by indicating signalling false state or signalling true state of the transmitted signal to the far end office by selectively further modulating or not further modulating the frequency modulated carrier signal prior to transmission.

13. A method according to claim 12, characterised in that the selective further modulation of the frequency modulated carrier signal at the near end office (22) is modulation with a narrowband signal having a bandwidth less than the data signal.

14. A method according to claim 12, characterised in that the carrier signal is maintained in a predetermined state when no data signal (TXD) is provided at the near end office (22).

15. A method according to claim 12, 13 or 14, characterised in that the near end office (22) indicates entry into loop-back test mode to the far end office (20) by attenuating the carrier signal.

16. A method according to claim 12, characterised by the near end office (22) coupling the frequency modulated carrier signal and a voice signal, following the step of selectively further modulating or not further modulating the frequency modulated carrier signal, to provide a multiplexed data voice signal and transmitting said data voice signal to the far end office (20); and by the far end office receiving and demultiplexing said data voice signal to recover the voice signal therefrom.

## Patentansprüche

1. Datentkommunikationssystem, mit:

einer Frequenzmodulationseinrichtung (48), der ein Datensignal zugeführt wird, um ein frequenzmoduliertes Signal zu liefern, das in Übereinstimmung mit dem Datensignal frequenzmoduliert ist;

einer Frequenzdemodulationseinrichtung (48), die das frequenzmodulierte Signal empfängt und frequenzdemoduliert, um das Datensignal wiederzugewinnen; und

einem Telefonsignalträger (13, 15, 21), der die Frequenzmodulationseinrichtung (48) und die Frequenzdemodulationseinrichtung (48) koppelt;

*gekennzeichnet durch* eine weitere Modulationseinrichtung (62), die mit dem Telefonsignalträger (13, 15, 21) gekoppelt ist und die von der Frequenzmodulationseinrichtung (48) und einem Signalisierungssignal (DTR) gespeist wird, um das frequenzmodulierte Signal in Übereinstimmung mit dem Signalisierungssignal weiter zu modulieren, um dem Telefonsignalträger (13, 15, 21) ein Übertragungsdatensignal zu liefern; und

eine weitere Demodulationseinrichtung (56), die mit dem Telefonsignalträger gekoppelt ist, um das Übertragungsdatensignal zum Wiedergewinnen des Signalisierungssignals zu demodulieren.

2. Gerät nach Anspruch 1, *dadurch gekennzeichnet, daß* die Frequenzmodulationseinrichtung (48) mit einem Trägersignal gekoppelt ist, um das Trägersignal in Übereinstimmung mit dem Datensignal einer Frequenzmodulation mit Frequenzumtastung zu unterziehen; wobei das Gerät weiterhin eine Einrichtung (60) aufweist, welche das Trägersignal in einem vorbestimmten Zustand hält, wenn das Datensignal ausgeschaltet ist; und wobei die weitere Modulationseinrichtung (62) das Trägersignal selektiv weitermoduliert, wenn das Signalisierungssignal einen Signalisierungsfehlerzustand anzeigt, oder das Trägersignal selektiv nicht weitermoduliert, wenn das Signalisierungssignal einen Signalisierungswahrzustand anzeigt.

3. Gerät nach Anspruch 2, *gekennzeichnet durch* eine Einrichtung (54), die mit dem Trägersignal und einem Rückkopplungssignal gekoppelt ist, um das Trägersignal zu dämpfen, wenn das Rückkopplungssignal einen Rückkopplungsbetriebsart-Wahrzustand anzeigt.

4. Gerät nach Anspruch 2, *dadurch gekennzeichnet, daß* die weitere Modulationseinrichtung (62) das Trägersignal mit einem Schmalbandsignal moduliert, das eine kleinere Bandbreite als das Datensignal auf-

EP 0 295 029 B1

weist.

5. Gerät nach Anspruch 2 oder 4, *dadurch gekennzeichnet, daß* die weitere Modulationseinrichtung (62) das Trägersignal phasenmoduliert.

6. Gerät nach Anspruch 5, *dadurch gekennzeichnet, daß* die weitere Modulationseinrichtung (62) aufweist:
einen Zähler (100), dem an einem Takteingang das Trägersignal (TXO) zugeführt wird und der ein geteiltes Signal liefert; und
ein Exklusiv-ODER-Gatter (102), dem das Trägersignal (TXO) und das geteilte Signal zugeführt werden.

7. Gerät nach Anspruch 2, *dadurch gekennzeichnet, daß* die weitere Modulationseinrichtung (62) das Trägersignal amplitudenmoduliert.

8. Gerät nach Anspruch 2, *dadurch gekennzeichnet, daß* die Frequenzmodulationseinrichtung (48) zusätzlich ein weiteres Trägersignal in Übereinstimmung mit dem Datensignal moduliert.

9. Datenkommunikationssystem nach Anspruch 1, *gekennzeichnet durch* einen Nahenddaten-Sprachmultiplexer (10) und einen Fernenddaten-Sprachmultiplexer (10), die über den Telefonsignalträger (13, 15, 21) gekoppelt sind, wobei der NahenddatenSprachmultiplexer aufweist:
die besagte Frequenzmodulationseinrichtung (48), die besagte weitere Modulationseinrichtung (62) und eine Einrichtung (40, 42) zum Koppeln des Übertragungsdatensignals und eines Sprachsignals, um ein gemultiplextes Signal zu liefern;
wobei der Fernenddaten-Sprachmultiplexer aufweist:
die besagte Frequenzdemodulationseinrichtung (48), die besagte weitere Demodulationseinrichtung (56) und eine Einrichtung (40, 44) zum Auftrennen eines gemultiplexten Signals in ein Übertragungsdatensignal und ein Sprachsignal.

10. Gerät nach Anspruch 9, *dadurch gekennzeichnet, daß* der Fernenddaten-Sprachmultiplexer eine Detektoreinrichtung (50) aufweist, die durch Vergleich einer Trägersignalspannung des Übertragungsdatensignals mit einer vorbestimmten Spannungsschwelle ermittelt, ob der Nahenddaten-Sprachmultiplexer den Eintritt in eine Rückkopplungs-Testbetriebsart anfordert; und eine Decodiereinrichtung (56), der das empfangene Übertragungsdatensignal zugeführt wird, und die durch Erfassen der Schmalbandmodulation im Trägersignal ermittelt, ob der Nahenddaten-Sprachmultiplexer in den Signalisierungsfehlerzustand eintritt.

11. Gerät nach Anspruch 10, *dadurch gekennzeichnet, daß* die Decodiereinrichtung (56) aufweist:
einen schnellen Integrator (140), dem das Trägersignal zugeführt wird und der ein schnell integriertes Trägersignal liefert;
einen langsamen Integrator (142), dem das schnell integrierte Signal zugeführt wird und der ein langsam integriertes Signal liefert; und
einen Pegeldetektor (144), der mit dem langsamen Integrator gekoppelt ist und ein Phasenerfassungssignal liefert.

12. Verfahren zum Übertragen eines Datensignals (PXT) von einem Nahendbüro (22) zu einem Fernendbüro (20), mit folgenden Schritten:
Bereitstellen eines Trägersignals vom Nahendbüro (22);
Frequenzmodulieren des Trägersignals in Übereinstimmung mit dem Datensignal (TXT) und Übertragen des frequenzmodulierten Signals zu dem Fernendbüro (20) über einen Telefonsignalträger (13,15,21); und
Empfangen und Demodulieren des übertragenen Signals beim Fernendbüro (20), um das Datensignal (RXD) wiederzugewinnen;
*dadurch gekennzeichnet, daß* dem Fernendbüro durch selektives weiteres Modulieren oder nicht weiteres Modulieren des frequenzmodulierten Trägersignals vor der Übertragung ein Signalisierungsfehlerzustand oder ein Signalisierungswahrzustand des übertragenen Signals angezeigt wird.

13. Verfahren nach Anspruch 12, *dadurch gekennzeichnet, daß* die selektive weitere Modulation des frequenzmodulierten Trägersignals beim Nahendbüro (22) eine Modulation mit einem Schmalbandsignal ist, dessen Bandbreite kleiner als die des Datensignals ist.

12

**14.** Verfahren nach Anspruch 12, *dadurch gekennzeichnet, daß* das Trägersignal in einem vorbestimmten Zustand aufrechterhalten wird, wenn beim Nahendbüro (22) kein Datensignal (TXT) geliefert wird.

**15.** Verfahren nach Anspruch 12, 13 oder 14, *dadurch gekennzeichnet, daß* das Nahendbüro (22) dem Fernendbüro (20) durch Dämpfen des Trägersignals den Eintritt in die Rückkopplungs-Testbetriebsart anzeigt.

**16.** Verfahren nach Anspruch 12, *dadurch gekennzeichnet, daß* das Nahendbüro (22) das frequenzmodulierte Trägersignal mit einem Sprachsignal koppelt, und zwar im Anschluß an den Schritt des selektiven weiteren Modulierens oder nicht weiteren Modulierens des frequenzmodulierten Trägersignals, um ein gemultiplextes Datensprachsignal zu liefern und um dieses Datensprachsignal zum Fernendbüro (20) zu übertragen;
und daß das Fernendbüro das Datensprachsignal empfängt und demultiplext, um daraus das Sprachsignal wiederzugewinnen.

## Revendications

**1.** Système de communication de données comprenant :
des moyens de modulation en fréquence (48), alimentés par un signal de données, pour fournir un signal modulé en fréquence qui est modulé en fréquence en fonction du signal de données ;
des moyens de démodulation en fréquence (48), pour recevoir et démoduler en fréquence le signal modulé en fréquence afin de reconstituer le signal de données ; et
un système à courants porteurs pour signaux téléphoniques (13, 15, 21) couplant lesdits moyens de modulation en fréquence (48) et lesdits moyens de démodulation en fréquence (48) ;
caractérisé en ce qu'il comprend :
des moyens supplémentaires de modulation (62), couplés audit système à courants porteurs pour signaux téléphoniques (13, 15, 21) et alimentés par lesdits moyens de modulation de fréquence (48) et un signal de signalisation (DTR), pour moduler de nouveau le signal modulé en fréquence en fonction du signal de signalisation afin de fournir un signal transmis de données audit système à courants porteurs pour signaux téléphoniques (13, 15, 21) ; et
des moyens supplémentaires de démodulation (56), couplés audit système à courants porteurs pour signaux téléphoniques, pour démoduler le signal transmis de données afin de reconstituer le signal de signalisation.

**2.** Appareil selon la revendication 1, caractérisé en ce que les moyens de modulation en fréquence (48) sont couplés à un signal porteur afin de moduler par déplacement de fréquence le signal porteur en fonction du signal de données ; l'appareil comprenant en outre des moyens (60) pour conserver le signal porteur dans un état prédéterminé quand le signal de données est commuté hors service ; et les moyens supplémentaires de modulation (62) modulant de nouveau de manière sélective le signal porteur quand le signal de signalisation indique un état faux de signalisation, ou de manière sélective ne modulant pas le signal porteur quand le signal de signalisation indique un état vrai de signalisation.

**3.** Appareil selon la revendication 2, caractérisé par des moyens (54) couplés au signal porteur et à un signal de boucle de réaction pour atténuer le signal porteur quand le signal de boucle de réaction indique un état vrai de mode de boucle de réaction.

**4.** Appareil selon la revendication 2, caractérisé en ce que les moyens supplémentaires de modulation (62) modulent le signal porteur avec un signal à bande étroite ayant une largeur de bande inférieure au signal de données.

**5.** Appareil selon la revendication 2 ou 4, caractérisé en ce que les moyens supplémentaires de modulation (62) modulent en phase le signal porteur.

**6.** Appareil selon la revendication 5, caractérisé en ce que les moyens supplémentaires de modulation (62) comprennent :
un compteur (100) alimenté par le signal porteur (TXO) à une entrée d'horloge et fournissant un signal divisé ; et
une porte OU exclusif (102) alimentée par le signal porteur (TXO) et le signal divisé.

7. Appareil selon la revendication 2, caractérisé en ce que les moyens supplémentaires de modulation (62) modulent en amplitude le signal porteur.

8. Appareil selon la revendication 2, caractérisé en ce que les moyens de modulation en fréquence (48) modulent en outre un autre signal porteur en fonction du signal de données.

9. Système de communication de données selon la revendication 1, caractérisé par un multiplexeur d'extrémité proche pour la voix et les données (10) et un multiplexeur d'extrémité éloignée pour la voix et les données (10) couplés par ledit système à courants porteurs pour signaux téléphoniques (13, 15, 21), le multiplexeur d'extrémité proche pour la voix et les données comprenant :
lesdits moyens de modulation en fréquence (48), lesdits moyens supplémentaires de modulation (62), et des moyens (40, 42) pour coupler le signal de données transmis avec un signal de parole afin de produire un signal multiplexé ;
le multiplexeur d'extrémité éloignée pour la voix et les données comprenant :
lesdits moyens de démodulation en fréquence (48), lesdits moyens supplémentaires de démodulation (56), et des moyens (40, 44) pour séparer un signal multiplexé en un signal de données transmis et un signal de parole.

10. Appareil selon la revendication 9, caractérisé en ce que le multiplexeur d'extrémité éloignée pour la voix et les données comprend des moyens de détection (50) pour déterminer si le multiplexeur d'extrémité proche pour la voix et les données demande l'entrée d'un mode de test en boucle en comparant une tension de signal porteur du signal transmis de données avec un seuil prédéterminé de tension ; et des moyens de décodage (56), alimentés par le signal transmis de données reçu, pour déterminer si le multiplexeur d'extrémité proche pour la voix et les données entre dans un état de signalisation fausse en détectant un modulation à bande étroite dans le signal porteur.

11. Appareil selon la revendication 10, caractérisé en ce que les moyens de décodage (56) comprennent :
un intégrateur rapide (140) alimenté par le signal porteur et fournissant un signal porteur à intégration rapide ;
un intégrateur lent (142) alimenté par le signal à intégration rapide et fournissant un signal à intégration lente ; et
un détecteur de niveau (144) couplé à l'intégrateur lent et fournissant un signal de détection de phase.

12. Procédé pour communiquer un signal de données (TXD) depuis un bureau d'extrémité proche (22) vers un bureau d'extrémité éloignée (20) comprenant les étapes suivantes :
moduler en fréquence le signal porteur en fonction du signal de données (TXD) et transmettre le signal modulé en fréquence au bureau d'extrémité éloignée (20) par l'intermédiaire d'un système à courants porteurs pour signaux téléphoniques (13, 15, 21) ; et
recevoir et démoduler, au bureau d'extrémité éloignée (20), le signal transmis pour reconstituer le signal de données (RXD) ;
caractérisé par une indication d'un faux état de signalisation ou d'un état vrai de signalisation du signal transmis au bureau d'extrémité éloignée, en modulant de nouveau et de manière sélective, ou en ne modulant plus, le signal porteur modulé en fréquence avant la transmission.

13. Procédé selon la revendication 12, caractérisé en ce que la modulation supplémentaire sélective du signal porteur modulé en fréquence au bureau d'extrémité proche (22) est une modulation avec un signal à bande étroite ayant une largeur de bande inférieure au signal de données.

14. Procédé selon la revendication 12, caractérisé en ce que le signal porteur est maintenu dans un état prédéterminé quand aucun signal de données (TXD) n'est fourni au bureau d'extrémité proche (22).

15. Procédé selon la revendication 12, 13 ou 14, caractérisé en ce que le bureau d'extrémité proche (22) indique au bureau d'extrémité éloignée (20) une entrée dans un mode de test en boucle en atténuant le signal porteur.

16. Procédé selon la revendication 12, caractérisé en ce que le bureau d'extrémité proche (22) couple le signal porteur modulé en fréquence et un signal de parole, après l'étape consistant à moduler de nouveau et de manière sélective, ou à ne pas moduler, le signal porteur modulé en fréquence, afin de fournir un signal multiplexé de parole et de données et de transmettre ledit signal de parole et de données au bureau d'extrémité éloignée (20) ; et en ce que le bureau d'extrémité éloignée reçoit et démultiplexe ledit signal de parole et de données pour reconstituer à partir dudit signal de parole et de donnée le signal de parole.

FIG. 1

EP 0 295 029 B1

FIG. 2

FIG. 3

EP 0 295 029 B1

DTR o————————————

ENA

÷16  OUT

CLK

TXO o————————

62

100

102

TEO

FIG. 4

FIG. 5

EP 0 295 029 B1